# EUROPÄISCHE PATENTSCHRIFT

(11) **EP 0 454 956 B1**
(45) Veröffentlichungstag und Bekanntmachung des Hinweises auf die Patenterteilung: **22.09.1993**
(21) Anmeldenummer: 91102602.9
(22) Anmeldetag: 22.02.1991
(51) Int. Cl.: F16D 3/79

(54) **Kupplung mit mehreren hintereinandergeschalteten Lamellenpaketen**
Coupling with serially mounted lamellae groups
Accouplement muni de plusieurs ensembles de lamelles disposés en série

(30) Priorität: 28.04.1990 DE 4013716
(43) Veröffentlichungstag der Anmeldung: 06.11.1991
(73) Patentinhaber: ATEC-Weiss GmbH & Co. KG, D-48691 Vreden (DE)
(72) Erfinder: Weiss, Hermann, Dipl.-Ing., W-4426 Vreden (DE); Mietke, Frank, Dipl.-Ing., W-4423 Gescher (DE)
(74) Vertreter: Cohausz & Florack Patentanwälte

(56) Entgegenhaltungen:
- DE-U- 9 004 886
- FR-E- 85 477

## Beschreibung

Die Erfindung betrifft eine Ganzstahlkupplung zur Verbindung einer Welle mit einer Nabe bestehend aus zwei koaxial zueinander angeordneten hintereinandergeschalteten Flanschpaaren, deren eine Flansche mit Welle bzw. Nabe verbunden sind und deren andere Flansche gemeinsam mittels einer Hülse starr verbunden sind, und zwei jeweils einem Flanschpaar zugeordneten Lamellenpaketkränzen, die umfangsmäßig abwechselnd mit dem einen bzw. anderen Flansch des jeweiligen Flanschpaares verbunden sind, wobei an dem mit der Welle verbundenen Flansch ein sich in Richtung auf die Nabe erstreckendes Zwischenstück angeformt ist, welches konzentrisch, radial festgelegt un axial beweglich gelagert ist.

Eine Kupplung dieser Art ist aus dem deutschen Gebrauchsmuster 7100034 bekannt. Eine solche Kupplung hat den Vorteil, daß sie aufgrund der hintereinandergeschalteten Lamellenpaketkränze eine größere axiale Verschiebung zuläßt, als bei Kupplungen mit einem Lamellenpaketkranz, ohne daß in den Lamellen unzulässig hohe Biege- bzw. Zugbeanspruchungen auftreten. Bei der bekannten Kupplung sind zwei Flanschpaare vorgesehen, wobei die eine der Welle zugeordnete Flanschverbindung nur Axialversatz aufnehmen kann, wo hingegen die zweite, der Nabe zugeordnete Flanschverbindung, zusätzlich auch Winkelversatz bewältigen kann.

Die Festlegung der der Welle zugeordneten Flanschverbindung in einer Weise, daß sie nur Axialversatz, nicht aber Winkelversatz aufnehmen kann, erfolgt durch ein an den einen mit der Welle verbundenen Flansch angeformtes Zwischenstück, welches bei dem bekannten Gegenstand mittels einer Lagerbuchse in einer Hülse axial verschieblich gelagert ist. Die Anordnung des Lagers bei der bekannten Ganzstahlkupplung ist innerhalb des durch die beiden Lamellenpaketkränze eingeschlossenen durch die Hülse begrenzten Bereiches vorgesehen.

Ein Lager, wie es bei dem bekannten Gegenstand vorgesehen ist, ist jedoch zum einen aufwendig beim Zusammenbau und zum anderen können sich seine Lagereigenschaften im Laufe des Betriebes verändern. Dadurch kann es bei Kupplungen mit dem bekannten Aufbau zu Instabilitäten bzw. Funktionsbeeinträchtigungen kommen.

Demgegenüber liegt der Erfindung die Aufgabe zugrunde, eine Kupplung der eingangs genannten Art derart weiterzuentwickeln, daß die Lagerung des Zwischenstückes konstruktiv einfacher und hinsichtlich ihrer Funktionssicherheit verbessert wird.

Gemäß der Erfindung sind ausgehend von dieser Aufgabenstellung zwei Lösungen vorgesehen.

Zum einen wird diese Aufgabe dadurch gelöst, daß das Lager für das Zwischenstück durch eine sich radial erstreckende Querlamellenanordnung gebildet ist.

Bei dieser erfindungsgemäßen ersten Variante erfüllt die Querlamellenanordnung die Funktion eines in axialer Richtung nachgiebigen, in radialer Richtung jedoch starren Lagers.

Besondere Maßnahmen, um die Axialbeweglichkeit des Lagers zu erhalten, beispielsweise eine Schmierung, oder das Vorsehen von Kunststoff-Führungsbuchsen, können bei dieser Variante der Erfindung entfallen. Vielmehr wird die axiale Nachgiebigkeit ausschließlich durch die Federelastizität der Querlamellen gewährleistet.

Eine bevorzugte Ausbildung dieser ersten Variante ergibt sich, wenn die Lamellenanordnung durch drei sternförmig zusammenstoßende Lamellenpakete gebildet ist, in deren Zentraum das Zwischenstück mittels einer Schraubverbindung befestigt ist. Durch die sternförmige Lamellenanordnung ergibt sich eine besonders große Nachgiebigkeit in axialer Richtung, während das Lager radial ohne Spiel ausgeführt ist.

Hinsichtlich der Stabilität zeigt die beschriebene erste Variante der Erfindung ein optimales Verhalten, wenn die Querlamellenanordnung in unmittelbarer Nähe des der Nabe zugeordneten Flanschpaares angeordnet ist.

Wenn darüber hinaus die Querlamellenanordnung an den Haltepunkten für den der Habe zugeordneten Lamellenpaketkranz befestigt ist, ist der fertigungstechnische Aufwand für den Einbau des Querlamellenpaketes nur noch sehr gering, weil bereits bestehende Konstruktionselemente mitverwendet werden können.

Die genannte Aufgabe wird bei einer zweiten Variante der Erfindung dadurch gelöst, daß das Lager für das Zwischenstück durch ein Halteteil gebildet ist, dessen Flansch mit einer in der Hülse angeformten Flanschfläche ein weiteres Flanschpaar bildet, dessen Flansche umfangsmäßig abwechselnd mit einem weiteren Lamellenpaketkranz verbunden sind.

Gemäß dieser Variante ist neben den auch bei der bekannten Kupplung verwendeten Lamellenpaketkränzen ein weiterer Lamellenpaketkranz vorgesehen, der zur Ausbildung des axial nachgiebigen radial jedoch starren Lagers dient. Eine gesonderte Ausbildung des Lagersitzes wie bei der bekannten Kupplung entfällt auch bei dieser Variante. Diese Varainte zeichnet sich zudem durch eine besonders robuste Bauform aus, wodurch deren Lebensdauer erhöht wird. Für die Ausbildung der Aufhängung für das Zwischenstück gemäß der zweiten Variante der Erfindung können übliche Konstruktionselemente wie Stahllamellen und Bolzenverschraubungen verwendet werden.

Wenn das Zwischenstück mittels einer Preßverbindung mit dem Halteteil verbunden ist, ergibt sich der zusätzliche Vorteil, daß das Zwischenstück beim Einbau zunächst in das Halteteil lose eingeschoben werden kann und anschließend durch Ausbildung der Preßverbindung in ihm gehalten wird. Dies erleichtert den Zusammenbau der Kupplung merklich.

Eine besondere Ausführung für die Preßverbindung ergibt sich dadurch, daß die Preßverbindung aus einem Überwurfring mit einer konischen Innenfläche gebildet ist, deren Steigung einem konischen Bereich an der Außenfläche des Halteteils entspricht, wobei der Überwurfring durch im Halteteil vorgesehene Schrauben derart gegen die Außenfläche des Halteteils verschiebbar ist, daß die Flächenpressung auf das Zwischenstück erhöht wird. Diese besondere Ausführungsform dient zu einer weiteren Erleichterung des Zusammenbaus der erfindungsgemäßen Kupplung.

Die Erfindung wird im folgenden anhand einer die beiden Varianten der erfindungsgmäßen Lösung darstellenden Zeichnung näher erläutert.

Dabei zeigen:
- Fig. 1a: einen Längsschnitt durch ein Ausführungsbeispiel gemäß der ersten Variante der Erfindung.
- Fig. 1b: einen Schnitt entlang der Linie A-B in Fig.1a und
- Fig. 2: einen Schnitt durch ein Ausführungsbeispiel gemäß der zweiten Variante der Erfindung.

Unter Bezug auf Fig. 1a ist ein Ausführungsbeispiel der ersten Variante der erfindungsgemäßen Ganzstahlkupplung dargestellt. Die Verbindung zwischen der Welle 1 und der Nabe 2 erfolgt über eine Hülse 5, welche mit den der Welle 1 bzw. der Habe 2 zugeordneten einen Flansche 3a,4b, zwei Flanschpaare 3a,3b;4a,4b bildet. Die Flanschpaare 3a,3b bzw. 4a,4b sind koaxial zueinander angeordnet und mechanisch hintereinandergeschaltet. Jeweils einem Flanschpaar 3a,3b;4a,4b ist ein Lamellenpaketkranz 3c bzw. 4c zugeordnet. Die Lamellenpaketkränze 3c, 4c, sind jeweils umfangsmäßig abwechselnd mit dem einen bzw. anderen Flansch des jeweiligen Flanschpaares 3a,3b;4a,4b verbunden.

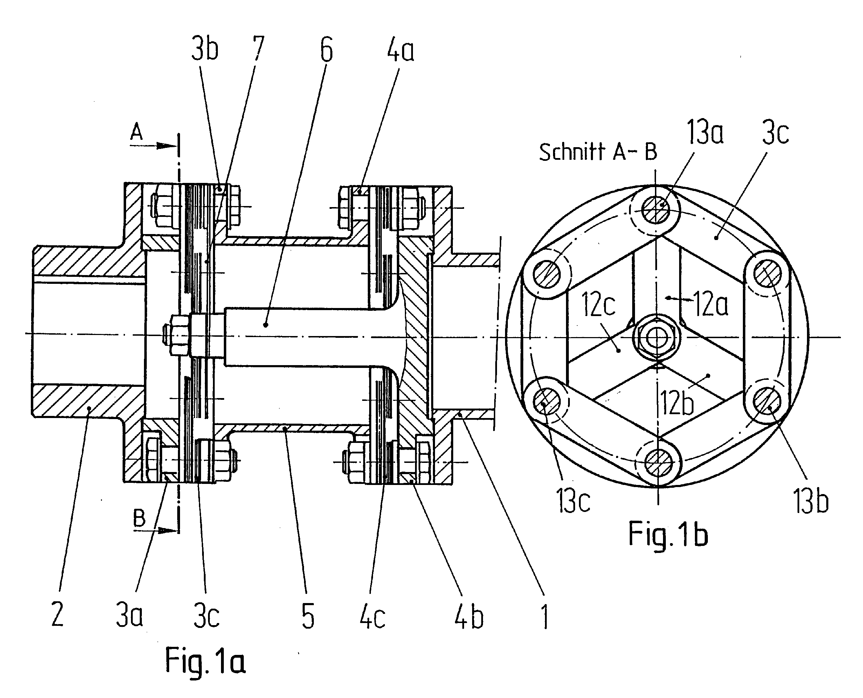

An den einen mit der Welle 1 verbundenen Flansch 4b ist ein sich in Richtung auf die Nabe 2 erstreckendes Zwischenstück 6 in Form einer zylindrischen Welle angeformt. Die auf die Nabe 2 gerichtete Vorderseite des Zwischenstückes 6 trägt einen Zapfen mit einem Gewinde, welcher mittels einer Mutter in einem in Fig. 1b dargestellten sternförmig ausgebildeten Querlamellenanordnung 7 befestigt ist. Die Querlamellenanordnung 7 besteht aus sich sternförmig kreuzenden, in ihrer Länge jeweils etwa der Hälfte des Kupplungsdurchmessers entsprechenden Lamellenpaketen 12a,12b,12c, deren gemeinsames Ende mit dem Anschlußpunkt des Zapfens des Zwischenstücks 6 zusammenfallen und deren getrennte Enden durch Haltepunkte 13a,13c,13b gebildet werden.

Diese Haltepunkte sind gemeinsam auch Haltepunkte für den der Nabe 2 zugeordneten Lamellenpaketkranz 3c soweit diese Verbindungspunkte zwischen dem Lamellenpaketkranz 3c und dem Flansch 3b der Hülse 5 darstellen.

Die in den Fig. 1a und 1b beschriebene Ganzstahlkupplungsanordnung zeichnet sich dadurch aus, daß die an den Flanschpaaren 4a,4b gebildete Verbindung nur Axialversatz aufnehmen kann, während die im Bereich der Flanschpaare 3a,3b gebildete Verbindung zusätzlich auch Winkelversatz ausgleichen kann. Diese Eigenschaft läßt sich dadurch erzielen, daß die Flanschverbindung im Bereich des Flanschpaares 4a,4b durch die radiale Starrheit des durch die Querlamellenanordnung 7 gebildeten Lagers festgelegt ist. Demgegenüber kann die erfindungsgemäße Kupplung einen merklichen Axialversatz aufnehmen, ohne daß es zu einer Überlastung der Lamellenpakete kommt.

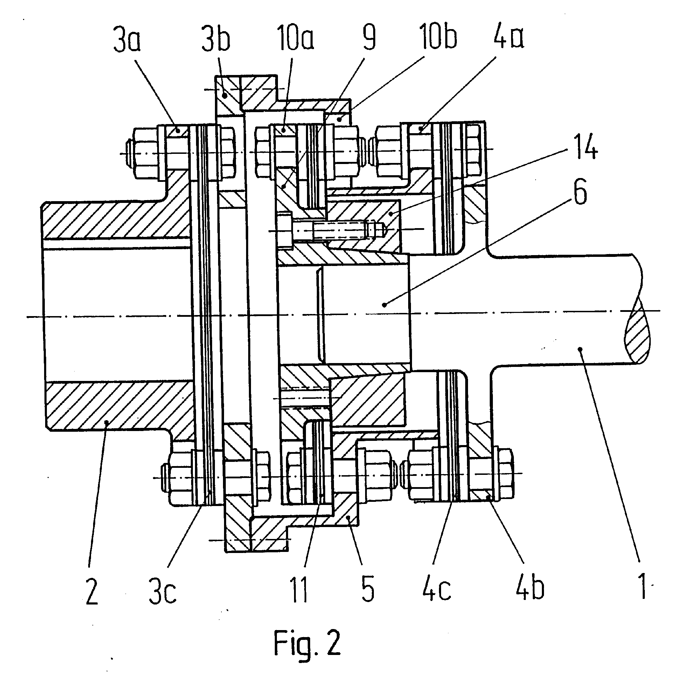

Unter Bezugnahme auf Fig.2 wird die zweite Variante gemäß der Erfindung näher erläutert. Gemeinsame konstruktive Elemente mit dem in Fig.1a,1b dargestellten Ausführungsbeispiel der ersten Variante sind in Fig.2 mit den entsprechenden Bezugszeichen versehen. So ist auch gemäß dem Ausführungsbeispiel der zweiten Variante zwischen den beiden der Welle 1 bzw. der Nabe zugeordneten Flanschpaaren 3a,3b bzw. 4a,4b eine Hülse 5 vorgesehen, die die einander zugewandten Flansche 3b,4a starr verbindet. Im Gegensatz zu dem in Fig. 1a und 1b dargestellten Ausführungsbeispiel ist die Hülse 5 so geformt, daß sie eine Flanschfläche 10b umfaßt. Diese Flanschfläche 10b bildet mit einem Flansch 10a eines Halteteiles 9 ein weiteres, drittes Flanschpaar.

Das Halteteil 9 ist über einen Überwurfring 14 mit der zapfenförmig ausgebildeten Spitze des Zwischenstückes 6 in der Art einer Preßkeilverbindung verbunden.

Über im Halteteil vorgesehene Schrauben läßt sich die Flächenpressung zwischen dem Zapfen des Zwischenstückes 6 und dem Halteteil 9 so erhöhen, daß das Zwischenstück fest im Halteteil 9 eingespannt ist. Das Flanschpaar 10a, 10b ist umfangsmäßig abwechselnd mit einem weiteren, dritten Lamellenpaketkranz 11 mittels Schraubenbolzenverbindung gekoppelt.

Die Funktion des dargestellten Ausführungsbeispiels gemäß der zweiten Variante der Erfindung ist im wesentlichen äquivalent zu der Funktion des Ausführungsbeispiels der ersten Variante. Hierbei nimmt ebenfalls die Flanschverbindung 4a,4b nur Axialversatz auf, während die Flanschverbindung 3a,3b zusätzlich auch Winkelversatz aufnimmt. Die Flanschverbindung 10a,10b dient über den dritten Lamellenpaketkranz 11 als Aufhängung für das Zwischenstück 6. Diese Aufhängung gewährleistet einerseits eine axiale Nachgiebigkeit des Zwischenstückes 6 andererseits jedoch eine radial starre Führung, da die Lamellen in dieser Richtung nicht nachgeben.

Es ist auch denkbar, daß die Zwischenwelle 6 über andere bekannte Dämpfungseinrichtungen, wie Reibung oder Luftdämpfung mit dem Anschlußflansch 10b im Bereich der Hülse 5 verbunden werden kann. Auf diese Weise lassen sich unter Erhaltung der axialen Nachgiebigkeit unerwünschte Schwingungen des Zwischenstückes 6 in axialer Richtung verhindern.

## Patentansprüche

1. Ganzstahlkupplung zur Verbindung einer Welle (1) mit einer Nabe (2) bestehend aus zwei koaxial zueinander angeordneten hintereinandergeschalteten Flanschpaaren (3a,3b,4a,4b), deren eine Flansche (3a,4b) mit Welle (1) bzw. Nabe (2) verbunden sind und deren andere Flansche (3b,4a) gemeinsam mittels einer Hülse (5) starr verbunden sind, und zwei jeweils einem Flanschpaar (3a,3b,4a,4b) zugeordneten Lamellenpaketkränzen (3c,4c), die umfangsmäßig abwechselnd mit dem einen bzw. anderen Flansch des jeweiligen Flanschpaares (3a,3b,4a,4b) verbunden sind, wobei an dem mit der Welle (1) verbundenen Flansch (4b) ein sich in Richtung auf die Nabe (2) erstreckendes Zwischenstück (6) angeformt ist, welches konzentrisch, radial festgelegt und axial beweglich gelagert ist,
**dadurch gekennzeichnet**, daß das Lager für das Zwischenstück (6) durch eine sich radial erstreckende Querlamellenanordnung (7) gebildet ist.

2. Ganzstahlkupplung zur Verbindung einer Welle (1) mit einer Nabe (2) bestehend aus zwei koaxial zueinander angeordneten hintereinandergeschalteten Flanschpaaren (3a,3b,4a,4b), deren eine Flansche (3a,4b) mit Welle (1) bzw. Nabe (2) verbunden sind und deren Flansche (3b,4a) gemeinsam mittels einer Hülse (5) starr verbunden sind, und zwei jeweils einem Flanschpaar (3a,3b,4a,4b) zugeordneten Lamellenpaketkränzen (3c,4c), die umfangsmäßig abwechselnd mit dem einen bzw. anderen Flansch des jeweiligen Flanschpaares (3a,3b,4a,4b) verbunden sind, wobei an dem mit der Welle (1) verbunden Flansch (4b) ein sich in Richtung auf die Nabe (2) erstreckendes Zwischenstück (6) angeformt ist, welches konzentrisch, radial festgelegt und axial beweglich gelagert ist,
**dadurch gekennzeichnet**, daß das Lager für das Zwischenstück (6) durch ein Halteteil (9) gebildet ist, dessen Flansch (10a) mit einer in der Hülse (5) eingeformten Flanschfläche (10b) ein weiteres Flanschpaar (10a,10b) bildet, dessen Flansche (10a,10b) umfangsmäßig abwechselnd mit einem weiteren Lamellenpaketkranz (11) verbunden sind.

3. Ganzstahlkupplung nach Anspruch 1,
**dadurch gekennzeichnet**, daß die Querlamellenanordnung (7) durch drei sternförmig zusammenstoßende Lamellenpakete (12a,12b,12c) gebildet ist, in deren Zentrum das Zwischenstück (6) mittels einer Schraubverbindung befestigt ist.

4. Ganzstahlkupplung nach Anspruch 1 oder 3,
**dadurch gekennzeichnet,** daß die Querlamellenanordnung (7,12a-c) in unmittelbarer Nähe des, der Nabe (2) zugeordneten Flanschpaares (3a,3b) angeordnet ist.

5. Ganzstahlkupplung nach einem der Ansprüche 1,3,4
**dadurch gekennzeichnet,** daß die Querlamellenanordnung (7,12a-c) an Haltepunkten (13a,13b,13c) für den der Nabe (2) zugeordneten Lamellenpaketkranz (3c) befestigt ist.

6. Ganzstahlkupplung nach Anspruch 2,
**dadurch gekennzeichnet,** daß das Zwischenstück (6) mittels einer Preßverbindung (14) mit dem Halteteil (9) verbunden ist.

7. Ganzstahlkupplung nach Anspruch 2 oder 6,
**dadurch gekennzeichnet,** daß die Preßverbindung aus einem Überwurfring (14) mit einer konischen Innenfläche gebildet ist, deren Steigung einem konischen Bereich an der Außenfläche des Halteteils (9) entspricht, wobei der Überwurfring (14) durch im Halteteil (9) vorgesehene Schrauben derart gegen die Außenfläche des Halteteils (9) verschiebbar ist, daß die Flächenpressung auf das Zwischenstück (6) erhöhbar ist.

## Revendications

1. Accouplement tout-acier pour relier un arbre (1) à un moyeu (2) constitué de deux paires de flasques (3a, 3b, 4a, 4b) disposées coaxiales l'une à l'autre et montées l'une derrière l'autre dont l'un des flasques (3a, 4b) est relié alternativement à l'arbre (1) ou respectivement au moyeu (2) et dont les autres flasques (3b, 4a) sont reliés rigidement ensemble au moyen d'un manchon (5) et deux couronnes d'empilages de lamelles (3c, 4c) adjointes respectivement à une paire de flasques (3a, 3b, 4a, 4b) qui sont reliées périphériquement alternativement avec l'un ou respectivement l'autre de la paire de flasques (3a, 3b, 4a, 4b) respective, une pièce intermédiaire (6) s'étendant en direction du moyeu (2), qui est montée concentrique, fixée radialement et mobile axialement étant conformée sur le flasque (4b) relié à l'arbre (1),
caractérisé en ce que le palier pour la pièce intermédiaire (6) est formé par un ensemble de lamelles transversales (7) s'étendant radialement.

2. Accouplement tout-acier pour relier un arbre (1) à un moyeu (2) constitué de deux paires de flasques (3a, 3b, 4a, 4b) disposées coaxiales l'une à l'autre et montées l'une derrière l'autre dont l'un des flasques (3a, 4b) est relié alternativement à l'arbre (1) ou respectivement au moyeu (2) et dont les autres flasques (3b, 4a) sont reliés rigidement ensemble au moyen d'un manchon (5) et deux couronnes d'empilages de lamelles (3c, 4c) adjointes respectivement à une paire de flasques (3a, 3b, 4a, 4b) qui sont reliées périphériquement alternativement avec l'un ou respectivement l'autre de la paire de flasques (3a, 3b, 4a, 4b) respective, une pièce intermédiaire (6) s'étendant en direction du moyeu (2), qui est montée concentrique, fixée radialement et mobile axialement étant conformée sur le flasque (4b) relié à l'arbre (1),
caractérisé en ce que le palier pour la pièce intermédiaire (6) est formé par une pièce d'arrêt (9) dont le flasque (10a) forme avec une surface de flasque (10b) conformée dans le manchon (5) une autre paire de flasques (10 a, 10b) dont les flasques (10 a, 10b) sont reliés périphériquement alternativement à une autre couronne d'empilage de lamelles (11).

3. Accouplement tout-acier selon la revendication 1,
caractérisé en ce que l'ensemble de lamelles transversales (7) est formé par trois empilages de lamelles (12a, 12b, 12c) aboutés en forme d'étoile au centre desquels la pièce intermédiaire (6) est fixée au moyen d'un assemblage par vis.

4. Accouplement tout-acier selon la revendication 1 ou 3,
caractérisé en ce que l'ensemble de lamelles transversales (7, 12a-c) est disposé au voisinage immédiat de la paire de flasques (3a, 3b) adjointe au moyeu (2).

5. Accouplement tout-acier selon l'une des revendications 1, 3 et 4,
caractérisé en ce que l'ensemble de lamelles transversales (7, 12a-c) est fixé à des points d'appui (13a, 13b, 13c) pour la couronne d'empilage de lamelles (3c) adjointe au moyeu (2).

6. Accouplement tout-acier selon la revendication 2,
caractérisé en ce que la pièce intermédiaire (6) est reliée à la pièce d'arrêt (9) au moyen d'une liaison de pression (14).

7. Accouplement tout-acier selon la revendication 2 ou 6,
caractérisé en ce que la liaison de pression est formée par une bague-clavette (14) avec une surface interne conique dont la pente correspond à une zone conique sur la surface externe de la pièce d'arrêt (9), la bague-clavette (14) pouvant coulisser entre la surface externe de la pièce d'arrêt (9) au moyen de vis prévues dans la pièce d'arrêt (9) de telle manière que la pression superficielle sur la pièce intermédiaire (6) peut être augmentée.

## Claims

1. An all-steel coupling for connecting a shaft (1) to a hub (2), comprising two pairs of serially connected flanges (3a, 3b, 4a, 4b) disposed coaxially of one another, one of the flanges (3a, 4b) being connected to the shaft (1) and hub (2) respectively, the other flanges (3b, 4a) being rigidly connected jointly by means of a sleeve (5), and two annular lamellae groups (3c, 4c) which are each associated with one pair of flanges (3a, 3b, 4a, 4b) and are connected peripherally alternately to one and the other flange of each pair of flanges (3a, 3b, 4a, 4b), while formed on the flange (4b) connected to the shaft (1) is an intermediate member (6) extending in the direction of the hub (2) and mounted fixed concentrically and radially and movably axially, characterized in that the bearing for the intermediate member (6) is formed by a radially extending transverse lamellae arrangement (7).

2. An all-steel coupling for connecting a shaft (1) to a hub (2), comprising two pairs of serially connected flanges (3a, 3b, 4a, 4b) disposed coaxially of one another, one of the flanges (3a, 4b) being connected to the shaft (1) and hub (2) respectively, the other flanges (3b, 4a) being rigidly connected jointly by means of a sleeve (5), and two annular lamellae groups (3c, 4c) which are each associated with one pair of flanges (3a, 3b, 4a, 4b) and are connected peripherally alternately to one and the other flange of each pair of flanges (3a, 3b, 4a, 4b), while formed on the flange (4b) connected to the shaft (1) is an intermediate member (6) extending in the direction of the hub (2) and mounted fixed concentrically and radially and movably axially, characterized in that the bearing for the intermediate member (6) is formed by a retaining member (9) whose flange (10a) cooperates with a flange surface (10b) formed in the sleeve (5) to form a further pair of flanges (10a, 10b), whose flanges (10a, 10b) are connected peripherally alternately with a further annular lamellae group (11).

3. An all-steel coupling according to claim 1, characterized in that the transverse lamellae arrangement (7) is formed by three lamellae groups (12a, 12b, 12c) which abut in star shape and in whose centre the intermediate member (6) is attached by a screwed connection.

4. An all-steel coupling according to claims 1 or 3, characterized in that the transverse lamellae arrangement (7, 12a-c) is disposed immediately adjacent the pair of flanges (3a, 3b) associated with the hub (2).

5. An all-steel coupling according to one of claims 1, 3, 4, characterized in that the transverse lamellae arrangement (7, 12a-12c) is attached to retaining points (13a, 13b, 13c) for the annular lamellae group (3c) associated with the hub (2).

6. An all-steel coupling according to claim 2, characterized in that the intermediate member (6) is connected to the retaining member (9) via a pressure fit (14).

7. An all-steel coupling according to claims 2 or 6, characterized in that the pressure fit is formed by a collar ring (14) having a conical inner surface whose pitch corresponds to a conical zone on the outer surface of the retaining member (7), the collar ring (14) being so displaceable in relation to the outer surface of the retaining member (9) via screws provided therein that the surface pressure on the intermediate member (6) can be increased.
